(19) Europäisches Patentamt
European Patent Office
Office européen des brevets

(11) **EP 4 357 039 A1**

(12) **EUROPEAN PATENT APPLICATION**
published in accordance with Art. 153(4) EPC

(43) Date of publication:
**24.04.2024 Bulletin 2024/17**

(21) Application number: **22848927.4**

(22) Date of filing: **24.03.2022**

(51) International Patent Classification (IPC):
**B09B 5/00** (2006.01)    **B29B 17/02** (2006.01)
**B09B 3/20** (2022.01)

(52) Cooperative Patent Classification (CPC):
**B09B 3/20; B09B 5/00; B29B 17/02; Y02W 30/62**

(86) International application number:
**PCT/JP2022/014144**

(87) International publication number:
**WO 2023/007843 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 JP 2021126213**

(71) Applicant: **Unicharm Corporation
Shikokuchuo-shi, Ehime 799-0111 (JP)**

(72) Inventors:
• **KONISHI, Takayoshi
Kanonji-shi, Kagawa 769-1602 (JP)**
• **KURITA, Noritomo
Kanonji-shi, Kagawa 769-1602 (JP)**

(74) Representative: **Dolleymores
9 Rickmansworth Road
Watford, Hertfordshire WD18 0JU (GB)**

(54) **PRETREATMENT METHOD AND PRETREATMENT APPARATUS FOR USED ABSORBENT ARTICLES**

(57)    The present invention provides a pretreatment method for used absorbent articles, the method being capable of reducing the weight of a used absorbent article, while maintaining the used absorbent article in a recovered state, with use of a small amount of an aqueous solution. This pretreatment method removes dirt adhering to the used absorbent article, which contains a superabsorbent polymer, and also removes a water content absorbed in the absorbent article. This pretreatment method comprises an introduction step (S1), an inactivation step (S2) and a removal step (S3). In the introduction step (S1), a plurality of used absorbent articles in the recovered state and a strongly acidic aqueous solution are introduced into a treatment tank. The liquid level of the acidic aqueous solution is positioned lower than the uppermost parts of the plurality of used absorbent articles that are not floating. In the inactivation step (S2), the plurality of used absorbent articles are impregnated with the acidic aqueous solution by repeating application and release of a pressure to the used absorbent articles in the acidic aqueous solution within the treatment tank, while maintaining the used absorbent articles in the recovered state. In the removal step (S3), a water content is removed from the plurality of used absorbent articles.

Fig. 1

```
        START
          |
  INTRODUCTION STEP      S1
          |
  INACTIVATION STEP      S2
          |
   REMOVAL STEP          S3
          |
         END
```

EP 4 357 039 A1

**Description**

FIELD

The present invention relates to a pretreatment method and a pretreatment apparatus of used absorbent articles.

BACKGROUND

A pretreatment method of removing dirt attached to a used absorbent article, moisture absorbed in the used absorbent article, and the like in advance before performing a treatment step for recycling the used absorbent article is known. For example, Patent Literature 1 discloses a method of treating used disposable diapers including washing used disposable diapers with water while sequentially transferring the used disposable diapers from a preceding-stage washing tank to a succeeding-stage washing tank using a continuous washing machine with a plurality of washing tanks arranged in series. According to this method, the used disposable diapers are prewashed in a prewashing tank and regularly washed in a regular washing tank, and at this time, quicklime (CaO) is mixed with water to dehydrate the superabsorbent polymer.

[CITATION LIST]

[PATENT LITERATURE]

Patent Literature 1: Japanese Unexamined Patent Publication No. 2009-183893

SUMMARY

[TECHNICAL PROBLEM]

In the method of Patent Literature 1, in a state where a used disposable diaper, that is, a used absorbent article is immersed in an aqueous solution stored in a treatment tank such as a prewashing tank or a regular washing tank, treatment such as removing attached dirt in the used absorbent article, dehydrating the superabsorbent polymer, or the like is performed. At that time, since a sufficient amount of the aqueous solution is used for immersing the used absorbent article, there is a risk that the amount of wastewater of the aqueous solution after the treatment may be large.
Further, since an absorbent article usually has a smaller specific gravity than the aqueous solution even after the absorbent article is used, and contains air in the spaces between the materials (for example, the spaces between the sheets or between the constituent fibers), the absorbent article easily floats on the water surface even when the absorbent article is placed into the aqueous solution in the treatment tank. Therefore, even when the used absorbent article is placed into the aqueous solution, the absorbent article is in a state of being less likely to be immersed in the aqueous solution. That is, the aqueous solution is in a state of being less likely to permeate into the used absorbent article. Therefore, there is a risk that an inactivating agent such as quicklime (CaO) in the aqueous solution may not reach the superabsorbent polymer inside the used absorbent article. In such a case, it is difficult to dehydrate the superabsorbent polymer or to remove dirt attached to the used absorbent article. That is, it is difficult to reduce the weight of the used absorbent article, and when the absorbent article is transferred to the subsequent recycling treatment step, the absorbent article is heavy and bulky, which makes it difficult to handle the absorbent article. Therefore, there is a risk that temporary storage and transportation may become difficult.
In particular, used absorbent articles are often in a state of being generally rolled (hereinafter, also simply referred to as a "rolled state") by winding or folding the absorbent articles with the top sheet, on which excrement is excreted, being located on the inner side so that excrement is less likely to be exposed on the surface side and odor is less likely to be diffused to the surrounding area. In such a case, since the liquid-impermeable back sheet or the exterior sheet is positioned on the outer side, the tendency that the aqueous solution is less likely to permeate into the used absorbent article is remarkable.
However, when the used absorbent article is immersed in the aqueous solution and the stirring speed of the aqueous solution in the continuous washing machine is increased to make it easier for the aqueous solution to permeate into the used absorbent article, the used absorbent article may be damaged to cause the constituent members to leak out or may be separated into the constituent members and disassembled. Therefore, there is a risk that the used absorbent article cannot be maintained in a state when collected. In such a case, when the used absorbent article is transferred to the subsequent recycling treatment step, there is a risk that the number of fine members and mill ends is increased, which makes it difficult to handle the absorbent article. Therefore, there is a risk that temporary storage and transportation may become difficult to perform hygienically.

Therefore, an aspect of the present invention is to provide a pretreatment method of used absorbent articles capable of reducing the weight of the used absorbent articles while maintaining the used absorbent articles in a state when collected using a small amount of an aqueous solution.

[SOLUTION TO PROBLEM]

The present invention is a pretreatment method of removing dirt attached to a used absorbent article including a superabsorbent polymer and moisture absorbed in the used absorbent article, the method comprising:

an introduction step of introducing a plurality of used absorbent articles, and a strongly acidic aqueous solution into a treatment tank, each of the plurality of used absorbent articles being in a state when collected, a liquid level of the acidic aqueous solution being at a position lower than an uppermost part of the plurality of used absorbent articles that are not floating;
an inactivation step of immersing each of the plurality of used absorbent articles in the acidic aqueous solution by repeatedly applying and relaxing pressure to each of the plurality of used absorbent articles in the acidic aqueous solution, while maintaining the plurality of used absorbent articles in the state when collected in the treatment tank; and
a removal step of removing moisture from the plurality of used absorbent articles.

[ADVANTAGEOUS EFFECT OF THE INVENTION]

According to the present invention, a pretreatment method of used absorbent articles capable of reducing the weight of the used absorbent articles while maintaining the used absorbent articles in a state when collected using a small amount of an aqueous solution can be provided.

BRIEF DESCRIPTION OF DRAWINGS

FIG. 1 is a flow chart illustrating an example of a pretreatment method according to an embodiment.
FIG. 2 is a schematic diagram illustrating a configuration example of a pretreatment apparatus according to an embodiment.

DESCRIPTION OF EMBODIMENTS

The present embodiment relates to the following aspects.

[Aspect 1]

A pretreatment method of removing dirt attached to a used absorbent article including a superabsorbent polymer and moisture absorbed in the used absorbent article, the method comprising:

an introduction step of introducing a plurality of used absorbent articles, and a strongly acidic aqueous solution into a treatment tank, each of the plurality of used absorbent articles being in a state when collected, a liquid level of the acidic aqueous solution being at a position lower than an uppermost part of the plurality of used absorbent articles that are not floating;
an inactivation step of immersing each of the plurality of used absorbent articles in the acidic aqueous solution by repeatedly applying and relaxing pressure to each of the plurality of used absorbent articles in the acidic aqueous solution, while maintaining the plurality of used absorbent articles in the state when collected in the treatment tank; and
a removal step of removing moisture from the plurality of used absorbent articles.

In the present pretreatment method, the liquid level of the acidic aqueous solution is at a position lower than the uppermost part of the plurality of used absorbent articles, and therefore the amount of the acidic aqueous solution is small. Therefore, the amount of wastewater in the present pretreatment method can be suppressed. At the same time, the phenomenon that the used absorbent article cannot be maintained in the state when collected, such as a case where the used absorbent article is separated and disassembled by the force of the water stream of the acidic aqueous solution, which may occur during the inactivation step, can be suppressed by reducing the amount of the acidic aqueous solution.
In the inactivation step, during an initial operation, a gas (for example, air) inside the used absorbent article is released to the outside by the application of pressure. Then, by the relaxation of the pressure, the external liquid (for example, acidic aqueous solution) is absorbed into the inside with the suction force accompanied by the restoration of the shape of the used absorbent article. During the subsequent operation, a gas and a liquid (for example, moisture released from the superabsorbent polymer by the inactivation of the superabsorbent polymer with the acidic aqueous solution) inside the used absorbent article is released to the outside by the application of pressure. Then, the external liquid (for example, acidic aqueous solution) is absorbed into the inside of the absorbent article by the relaxation of the pressure. Therefore, even when the amount of the acidic aqueous solution is small and the used absorbent article is in a state when collected, and further, in a rolled state, the acidic aqueous solution can be efficiently impregnated into the inside of the used absorbent article.

Since a strongly acidic aqueous solution is used as the acidic aqueous solution, even when the amount of the acidic aqueous solution is small, the superabsorbent polymer inside the used absorbent article can be reliably inactivated, which makes it possible to release moisture (for example, urine) inside the absorbent article to the outside and to dehydrate the superabsorbent polymer. Accordingly, in the removal step, by finally removing moisture from the used absorbent article, the weight of the used absorbent article can be reduced while maintaining the used absorbent article in the state when collected.

Here, in the inactivation step, along with the gas and the liquid released from the used absorbent article by the application of pressure, the excrement attached to the used absorbent article can be extruded outside. In this case, the weight of the used absorbent article can be further reduced while maintaining the used absorbent article in the state when collected.

As described above, in the pretreatment method of used absorbent articles, the weight of the used absorbent article can be reduced while maintaining the used absorbent article in the state when collected with a small amount of the acidic aqueous solution (treatment liquid). This makes it easier to handle the used absorbent article, and the absorbent article can be hygienically transferred and stored for transferring to the recycling treatment step. Further, the diffusion of excrement can be suppressed by suppressing the amount of wastewater, and a recycling treatment that is more hygienic and has less burden on the environment can be embodied

[Aspect 2]

The pretreatment method according to Aspect 1, wherein
the inactivation step includes a step of applying and relaxing the pressure by causing each of the plurality of used absorbent articles to collide with each other.

In the present pretreatment method, the inactivation step includes a step of applying and relaxing pressure by causing each of the plurality of used absorbent articles to collide with each other. Therefore, in the inactivation step, while maintaining the used absorbent article in the state when collected, the pressure can be easily and reliably applied and relaxed to the used absorbent article and the used absorbent article can be immersed in the acidic aqueous solution.

[Aspect 3]

The pretreatment method according to Aspect 2, wherein

the treatment tank is a horizontal rotating drum, and
the inactivation step includes a step of causing each of the plurality of used absorbent articles to collide with each other by rotation of the rotating drum.

In the present pretreatment method, since the treatment tank is a horizontal rotating drum, each of the plurality of used absorbent articles can be caused to easily and reliably collide with each other by the rotation of the rotating drum in the inactivation step. Therefore, while maintaining the used absorbent article in the state when collected, the pressure can be more easily and more reliably applied and relaxed to the used absorbent article and the used absorbent article can be immersed in the acidic aqueous solution.

[Aspect 4]

The pretreatment method according to any one of Aspects 1 to 3, wherein
in the introduction step, the liquid level of the acidic aqueous solution is at a position where 3/5 to 4/5 of the plurality of used absorbent articles are immersed.

In the present pretreatment method, the liquid level of the acidic aqueous solution in the introduction step is at a position where 3/5 to 4/5 (pieces) of the plurality of used absorbent articles are immersed. That is, 1/5 to 2/5 of the plurality of used absorbent articles may not be immersed. When a smaller amount of the acidic aqueous solution is used for the plurality of used absorbent articles as described above, the amount of wastewater can be further suppressed.

Further, the use of a smaller amount of the acidic aqueous solution makes it possible to further suppress the phenomenon that the used absorbent article is separated and disassembled from a state when collected by the force of the water stream of the acidic aqueous solution, which may occur during the inactivation step, and the like. Therefore, the plurality of used absorbent articles can be inactivated and dehydrated in the state when collected, and the weight thereof can be reduced.

[Aspect 5]

The pretreatment method according to any one of Aspects 1 to 4, wherein
in the introduction step, a weight of the acidic aqueous solution is a weight of 2 to 3 times a weight of the plurality of used absorbent articles in the treatment tank.
In the present pretreatment method, the weight of the acidic aqueous solution in the introduction step is a weight of 2 to 3 times the weight of the plurality of used absorbent articles in the treatment tank. When a small amount of the acidic aqueous solution is used for the plurality of used absorbent articles as described above, the amount of wastewater can be suppressed. Further, the use of a small amount of the acidic aqueous solution makes it possible to further suppress the phenomenon that the used absorbent article is separated or disassembled from a state when collected by the force of the water stream of the acidic aqueous solution, which may occur during the inactivation step, and the like. Therefore, the plurality of used absorbent articles can be inactivated and dehydrated in the state when collected, and the weight thereof can be reduced.

[Aspect 6]

The pretreatment method according to any one of Aspects 1 to 5, wherein
in the introduction step, a pH of the acidic aqueous solution is 2.0 or lower.
In the present pretreatment method, the pH of the acidic aqueous solution in the introduction step is 2.0 or lower. Therefore, even when the amount of the acidic aqueous solution is small with respect to the plurality of used absorbent articles, the inactivation step of the present pretreatment method makes it possible to more reliably inactivate and dehydrate the plurality of used absorbent articles in the state when collected, and the weight thereof can be reduced.

[Aspect 7]

The pretreatment method according to any one of Aspects 1 to 6, wherein
in the introduction step, the acidic aqueous solution contains sulfuric acid.
In the present pretreatment method, the acidic aqueous solution in the introduction step contains sulfuric acid. Therefore, even when the amount of the acidic aqueous solution is small with respect to the plurality of used absorbent articles, the inactivation step of the present pretreatment method makes it possible to more reliably inactivate and dehydrate the plurality of used absorbent articles in the state when collected, and the weight thereof can be reduced.

[Aspect 8]

The pretreatment method according to any one of Aspects 1 to 7, wherein
a dehydration rate of the plurality of used absorbent articles after the removal step is 40% or more.
In the present pretreatment method, the dehydration rate of the plurality of used absorbent articles after the removal step is 40% or more. Therefore, according to the present pretreatment method, the plurality of used absorbent articles can be extremely satisfactorily inactivated and dehydrated in the state when collected, and the weight thereof can be very effectively reduced.
Hereinafter, a pretreatment method according to an embodiment will be described.
A used absorbent article refers to an absorbent article used by a user and includes an unused but discarded absorbent article. The absorbent article includes a top sheet, a back sheet, and an absorbent body that is interposed between the both sheets, and the absorbent body includes a superabsorbent polymer, and may further include pulp fibers. As the absorbent article, for example, there are provided a disposable diaper, a urine collection pad, a sanitary napkin, a bed sheet, and a pet sheet.

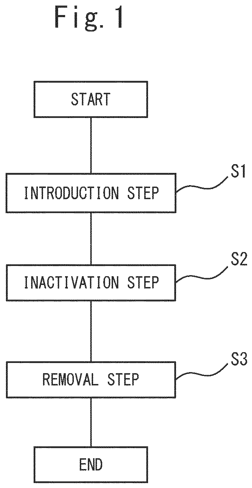

FIG. 1 is a flow chart illustrating an example of the pretreatment method according to the present embodiment. The pretreatment method is a method including performing a pretreatment of removing moisture absorbed (preferably including dirt attached) in a used absorbent article from the used absorbent article before introducing the used absorbent article into a recycling treatment step. Here, the recycling treatment step is a step of subjecting the used absorbent article to a treatment for recycling the materials which configure the used absorbent article. The recycling treatment step is not particularly limited, and for example, there is provided a method described in Japanese Unexamined Patent Publication No. 2020-183585, in which a film, a superabsorbent polymer, and pulp fibers are separated and recovered from a used absorbent article. It should be noted that, in a case where the method is used as the recycling treatment step, the hole opening step is not necessary.

The pretreatment method includes an introduction step S1, an inactivation step S2, and a removal step S3. The introduction step S1 is a step of introducing a plurality of used absorbent articles and a strongly acidic aqueous solution into a treatment tank. However, each of the plurality of used absorbent articles is in a state when collected, and the liquid level of the acidic aqueous solution is at a position lower than the uppermost part of the plurality of used absorbent articles that are not floating. Next, in the inactivation step S2, each of the plurality of used absorbent articles is immersed in the acidic aqueous solution by repeatedly applying and relaxing pressure to each of the plurality of used absorbent articles in the acidic aqueous solution while maintaining the plurality of used absorbent articles in a state when collected in the treatment tank. Next, in the removal step S3, moisture is removed from the plurality of used absorbent articles.

Here, the used absorbent article is in "a state when collected" refers to a state where the used absorbent article has not changed in shape from when the used absorbent article is transferred from the use place (for example, hospital, nursing care facility, home, and the like) and the collection place (for example, dedicated collection place, garbage collection place, and the like) to the place where the pretreatment method is performed. Specifically, the term "a state when collected " refers to a state where the used absorbent article is not damaged (for example, broken, crushed, or shredded), separated, disassembled, and the like from when the used absorbent article and the constituent members thereof are collected. Therefore, for example, reduction, enlargement, or deformation in size associated with compression, discharge (release) of attached and absorbed excrement, and the like are excluded. It should be noted that the term "a state when collected" of the used absorbent article includes "a rolled state". The term "a rolled state" refers to a state where the used absorbent article is generally rolled by winding or folding the used absorbent article with the top sheet, on which excrement is excreted, being located on the inner side in order to prevent excrement from being attached to the surrounding area or odor from being diffused to the surrounding area. There is no particular limitation on the rolling method such as a winding method or a folding method, and it is preferable that the tape attached to the absorbent article maintains its state in a rolled state.

In the introduction step S1, the strongly acidic aqueous solution to be introduced inactivates the superabsorbent polymer included in the used absorbent articles and dehydrates the superabsorbent polymer. The upper limit of the pH of the strongly acidic aqueous solution is preferably 2.0, and the lower limit is preferably 0.5. The acidic aqueous solution having a pH of 2.0 or lower can sufficiently inactivate and dehydrate the superabsorbent polymer and can further have a high sterilization ability even when the used absorbent article is in the state when collected, particularly, in a rolled state, and the amount of the acidic aqueous solution is small. That is, even in a situation where the acidic aqueous solution is less likely to spread such as in a situation where a large number of used absorbent articles are handled, the superabsorbent polymer can be sufficiently inactivated and dehydrated. The acidic aqueous solution having a pH of 0.5 or higher is less likely to corrode the equipment, which makes it possible to reduce the amount of an alkaline chemical required for a neutralization treatment during the wastewater treatment. It should be noted that since the term pH changes depending on the water temperature, the pH in the present invention refers to pH measured at an aqueous solution temperature of 20°C.

The amount of the acidic aqueous solution may be such that the liquid level of the acidic aqueous solution is at a position lower than the uppermost part of the plurality of used absorbent articles which are not floating. Here, the uppermost parts of the plurality of used absorbent articles refer to the uppermost part of the used absorbent article that is positioned on the uppermost side among the plurality of used absorbent articles which are not floating in the acidic aqueous solution in the treatment tank. It should be noted that the positions of the uppermost part of the plurality of used absorbent articles and the liquid surface are determined in a state where, when the plurality of used absorbent articles are viewed as a group, the plurality of used absorbent articles configuring the upper surface of the plurality of used absorbent articles are arranged side-by-side so as to be substantially horizontal. The term "substantially horizontal" refers that the amount of unevenness on the upper surface of the absorbent article is within ± two used absorbent articles 2.

As the type of the acidic aqueous solution, there are provided, for example, aqueous solutions of an inorganic acid and an organic acid. As the inorganic acid, for example, there are provided sulfuric acid, hydrochloric acid, and nitric acid, and sulfuric acid is preferable from the viewpoint of not containing chlorine, costs, or the like. As the organic acid, for example, there are provided citric acid, tartaric acid, glycolic acid, malic acid, succinic acid, acetic acid, ascorbic acid, and the like, and citric acid is preferable. Due to the chelating effect of citric acid, metal ions in excrement can be trapped and removed, and a high dirt component removal effect can be expected due to the washing effect of citric acid. In the present embodiment, sulfuric acid which is an inorganic acid is used.

The acid concentration of the acidic aqueous solution is not particularly limited as long as the above pH is satisfied. The acid concentration of the acidic aqueous solution of the inorganic acid is not particularly limited, but in a case where the inorganic acid is sulfuric acid, the acid concentration is preferably 0.1 to 2.0 mass%, and more preferably 0.15 to 1.5 mass%. The acid concentration of the acidic aqueous solution of the organic acid is not particularly limited, but in a case where the organic acid is citric acid, the acid concentration is preferably 0.5 to 4 mass%, and more preferably 0.8 to 3 mass%.

In the inactivation step S2, pressure is repeatedly applied and relaxed to the used absorbent article. That is, in the initial operation, a gas (for example, air) inside the used absorbent article is released to the outside by the application of pressure, and along with the released gas, the excrement attached to the used absorbent article is extruded to the outside. Subsequently, by the relaxation of the pressure, the external liquid (for example, acidic aqueous solution) is absorbed into the inside of the absorbent article with the suction force accompanied by the restoration of the shape of the used absorbent article. Further, in the subsequent operation, a gas and a liquid inside the used absorbent article (for example, moisture released by inactivation with the acidic aqueous solution) are released to the outside by the application of pressure, and along with the released gas and liquid, the excrement attached to the used absorbent article is extruded to the outside. Subsequently, the external liquid (for example, acidic aqueous solution) is absorbed into the inside of the absorbent article by the relaxation of pressure. Through such steps, while the used absorbent article can be maintained in the state when collected, the inside of the used absorbent article can be immersed in the acidic aqueous solution, and the excrement inside can be discharged to the outside. Here, along with the gas and the liquid released from the used absorbent article by the application of pressure, the excrement attached to the used absorbent article can be extruded to the outside.

In the removal step S3, the acidic aqueous solution (including the moisture discharged from the used absorbent article) in the treatment tank is discharged, and the acidic aqueous solution (including the moisture discharged from the used absorbent article) included in the nonwoven fabric or pulp fibers of the used absorbent article is discharged using, for example, a centrifugal force or pressure. At that time, along with the acidic aqueous solution (including moisture discharged from the used absorbent article) discharged from the used absorbent article, the excrement attached to the used absorbent article can be extruded to the outside. Further, the used absorbent article may be washed in water while being maintained in the state when collected, and then the step of removing the water from the used absorbent article may be performed at least once.

In the pretreatment method of the present embodiment, in the introduction step S 1, the liquid level of the acidic aqueous solution is at a position lower than the uppermost part of the plurality of used absorbent articles arranged in the treatment tank. Therefore, considering the amount of used absorbent articles, the amount of the acidic aqueous solution is relatively small. Therefore, the amount of wastewater in the present pretreatment method can be suppressed. At the same time, the phenomenon that the used absorbent article cannot be maintained in the state when collected, such as a case where the used absorbent article is separated and disassembled by the force of the water stream of the acidic aqueous solution, which may occur during the inactivation step S2, can be suppressed by reducing the amount of the acidic aqueous solution.

Further, in the inactivation step S2, by repeatedly applying and relaxing pressure to the used absorbent article, the inside of the used absorbent article can be immersed in the acidic aqueous solution. Since a strongly acidic aqueous solution is used as the acidic aqueous solution, even when the amount of the acidic aqueous solution is small, the superabsorbent polymer inside the used absorbent article can be reliably inactivated, which makes it possible to release moisture (for example, urine) inside the absorbent article to the outside and to dehydrate the superabsorbent polymer. Therefore, by finally removing moisture from the used absorbent article in the removal step S3, the weight of the used absorbent article can be reduced while maintaining the used absorbent article in the state when collected.

It should be noted that, in the inactivation step S2, when the moisture inside the superabsorbent polymer is released to the outside, the excrement attached to the inside or surface of the used absorbent article (including the surface of the top sheet or the like) in the state when collected can be extruded and caused to flow out. In this case, the weight of the used absorbent article can be further reduced while maintaining the used absorbent article in the state when collected.

As described above, in the pretreatment method of used absorbent articles (including S1 to S3), the weight of the used absorbent article can be reduced while maintaining the used absorbent article in the state when collected using a small amount of the acidic aqueous solution. This makes it easier to handle the used absorbent article, and the absorbent article can be hygienically transferred and stored for transferring to the recycling treatment step. Further, the diffusion of excrement can be suppressed by suppressing the amount of wastewater, and a recycling treatment that is more hygienic and has less burden on the environment can be embodied

It should be noted that all of the plurality of used absorbent articles are not necessarily in the state when collected. From the viewpoint of suppressing the influence of the used absorbent article that is not in the state when collected on the used absorbent article that is in the state when collected (for example, suppressing the damage to the used absorbent article), it is preferable that the proportion of the plurality of used absorbent articles present in the state when collected is 90% or more, and more preferably 95% or more. In the present embodiment, the proportion of the used absorbent article present in the state when recovered is 100%. It should be noted that the proportion of the plurality of used absorbent articles present in a rolled state is not particularly limited, but is preferably, for example, 90% or more, and more preferably 95% or more. In the present embodiment, the proportion of the used absorbent article present in the state when recovered is 100%.

For a method of repeatedly applying and relaxing pressure to each of the plurality of used absorbent articles in the inactivation step S2, pressure may be applied and relaxed by causing each of the plurality of used absorbent articles to collide with each other. The method of causing each of the plurality of used absorbent articles to collide with each other is not particularly limited, and for example, there are provided a method of stirring the acidic aqueous solution in the treatment tank and a method of shaking and rotating the treatment tank. Therefore, in the inactivation step S2, while maintaining the used absorbent article in the state when collected, the pressure can be easily and reliably applied and relaxed to the used absorbent article and the used absorbent article can be immersed in the acidic aqueous solution.

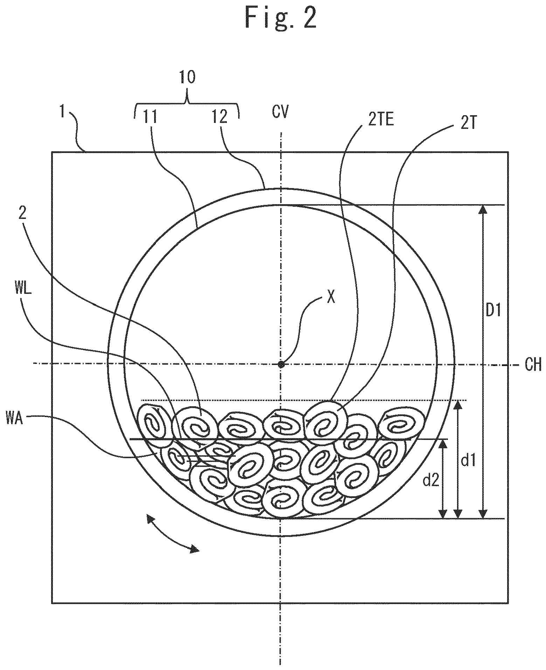

FIG. 2 is a schematic diagram illustrating a configuration example of a pretreatment apparatus according to an embodiment. There is no particular limitation on the means for embodying the pretreatment method (introduction step S 1, inactivation step S2, and removal step S3), and in the present embodiment, a pretreatment apparatus 1 shown in the drawing is used.

The pretreatment apparatus 1 is a washing apparatus having a horizontal rotating drum (which may be inclined with respect to the horizontal direction) as a treatment tank 10. The rotating drum (treatment tank 10) includes an outer tank 12 that has a horizontal plane CH including a rotation axis X thereof and a vertical plane CV including a rotation axis X thereof, and is capable of holding or discharging a liquid, and an inner tank 11 that is arranged on the inner side of the outer tank 12 so as to be rotatable about the rotation axis X and has a plurality of hole portions (not shown) on the circumferential wall. As such an apparatus, for example, there is provided a fully automatic washing and dehydrating machine.

The introduction step S1 using the pretreatment apparatus 1 in the present embodiment will be described. In the introduction step S1, an acidic aqueous solution WA is introduced into the inner tank 11 and the outer tank 12 of the treatment tank 10, and a plurality of used absorbent articles 2 are introduced into the inner tank 11.

There is no particular limitation on the arrangement of the plurality of used absorbent articles 2 in the inner tank 11, but as illustrated in FIG. 2, it is preferable that the plurality of used absorbent articles constituting the upper surface of the plurality of used absorbent articles are arranged so as to be arranged side-by-side along a plane substantially parallel to the horizontal plane CH when viewed as a group. The term "substantially along the horizontal plane CH" refers that the amount of unevenness on the upper surface of the absorbent article is within $\pm$ two used absorbent articles 2. This is from the viewpoint of ensuring that in the inactivation step S2, pressure is applied and relaxed to the plurality of used absorbent articles 2 in the substantially same manner.

Further, the amount of the plurality of used absorbent articles 2 in the inner tank 11 is not particularly limited, but as illustrated in FIG. 2, it is preferable that the plurality of used absorbent articles 2 are arranged so as to have such an amount that the plurality of used absorbent articles are positioned on the lower side with respect to the horizontal plane CH. When the amount of the plurality of used absorbent articles 2 that exceeds the horizontal plane CH is arranged in the inner tank 11, it becomes difficult to apply and relax pressure to the plurality of used absorbent articles 2 in the inactivation step S2 in the substantially same manner, and it also becomes difficult to spread the acidic aqueous solution WA to the plurality of used absorbent articles 2 in the substantially same manner.

The amount of the acidic aqueous solution WA may be such that a liquid level WL of the acidic aqueous solution WA is lower than an uppermost part 2TE of the plurality of used absorbent articles 2 which are not floating. However, the uppermost part 2TE of the plurality of used absorbent articles 2 refers to the uppermost part of a used absorbent article 2T that is positioned on the uppermost side among the plurality of used absorbent articles 2 which are not floating in the acidic aqueous solution WA in the inner tank 11. In other words, the uppermost part thereof refers to the uppermost part of the used absorbent article 2T that is positioned on the uppermost side among the plurality of non-floating used absorbent articles 2 constituting the upper surface of the plurality of used absorbent articles 2 when the plurality of used absorbent articles 2 are viewed as a group.

In the example of FIG. 2, the uppermost part 2TE of the used absorbent article 2T at the uppermost side is positioned at a height of d1 from a position of the deepest portion of the inner tank 11. On the other hand, the liquid level WL of the acidic aqueous solution WA is positioned at a height of d2 from a position of the deepest portion of the inner tank 11. Therefore, d1 > d2, and the liquid level WL of the acidic aqueous solution WA is at a position lower than the uppermost part 2TE of the plurality of used absorbent articles 2 which are not floating. By reducing the amount of the acidic aqueous solution WA, the used absorbent article 2 can be prevented from being separated and disassembled from the state when collected due to the force of the water stream of the acidic aqueous solution WA. It should be noted that, with respect to an inner diameter D1 of the inner tank 11, the horizontal plane CH is positioned at a height of D 1/2 from the position of the deepest portion of the inner tank 11, and D1/2 > d1, that is, the plurality of used absorbent articles 2 are positioned on the lower side with respect to the horizontal plane CH. Pressure can be applied and relaxed to the plurality of used absorbent articles 2 in the substantially same manner, and the acidic aqueous solution WA can be easily spread.

It is preferable that the liquid level WL of the acidic aqueous solution WA is at a position where approximately 3/5 to 4/5 (pieces) of all of the plurality of used absorbent articles 2 are immersed (or soaked). That is, 1/5 to 2/5 (pieces) of the plurality of used absorbent articles 2 may not immersed. When a smaller amount of the acidic aqueous solution WA is used for the plurality of used absorbent articles 2 as described above, the amount of wastewater can be further suppressed. Further, the use of a smaller amount of the acidic aqueous solution WA makes it possible to further suppress the phenomenon that the used absorbent article 2 is separated and disassembled from a state when collected by the force of the water stream of the acidic aqueous solution, which may occur during the inactivation step S2, and the like. Therefore, while maintaining the plurality of used absorbent articles 2 in the state when collected, the superabsorbent polymers thereof can be inactivated and dehydrated, and thus the weight of the plurality of used absorbent articles 2 can be reduced. It should be noted that, when the position of the liquid level WL of the acidic aqueous solution WA is excessively low, there is a risk that the acidic aqueous solution does not sufficiently spread to the plurality of used absorbent articles 2 and the plurality of used absorbent articles 2 cannot be sufficiently inactivated. On the other hand, when the position of the liquid level WL of the acidic aqueous solution WA is excessively high, there is a risk that the rolled state of each of the used absorbent articles 2 is collapsed, separated, and disassembled due to the influence of the water stream of a large amount of the aqueous solution.

In the example in FIG. 2, when the used absorbent articles 2 are arranged at approximately the same number density (the number per unit volume), the position of the liquid level WL of the acidic aqueous solution WA is a position where approximately 2/3 (pieces) of the plurality of used absorbent articles 2 are immersed (soaked).

The weight of the acidic aqueous solution WA is preferably 2 to 5 times the weight (including excrement) of the plurality of used absorbent articles 2, and more preferably 2 to 3 times the weight of the plurality of used absorbent articles 2. When the relatively small amount of the acidic aqueous solution WA is used for the plurality of used absorbent articles 2 as described above, the amount of wastewater can be suppressed. Further, the use of a small amount of the acidic aqueous solution WA makes it possible to suppress, for example, a phenomenon that the used absorbent article 2 is separated and disassembled from the state when collected by the force of the water stream of the acidic aqueous solution WA, which may be generated during the inactivation step S2. Therefore, while maintaining the plurality of used absorbent articles 2 in the state when collected, the superabsorbent polymers thereof can be inactivated and dehydrated, and thus the weight of the plurality of used absorbent articles 2 can be reduced. When the amount of the acidic aqueous solution WA is excessively small, there is a risk that the acidic aqueous solution WA does not sufficiently spread to the plurality of used absorbent articles 2 and the plurality of used absorbent articles 2 cannot be sufficiently inactivated. On the other hand, when the amount of the acidic aqueous solution WA is excessively large, the plurality of used absorbent articles are easily separated and disassembled by the water stream, and the amount of an alkaline chemical required for a neutralization treatment during the wastewater treatment is increased.

The temperature of the acidic aqueous solution WA is not particularly limited as long as the inactivation reaction proceeds in the inactivation step S2. The treatment temperature may be room temperature or higher than room temperature, and is, for example 15°C to 30°C. In addition, in the inactivation step S2, the time for treating the used absorbent articles in the acidic aqueous solution is not particularly limited as long as the superabsorbent polymer is inactivated and dehydrated, and for example, the treatment time is 1 to 60 minutes, and preferably 5 to 30 minutes.

Next, the inactivation step S2 using the pretreatment apparatus 1 in the present embodiment will be further described. In the inactivation step S2, the plurality of used absorbent articles 2 are moved in the inner tank 11 by rotating the inner tank 11 in the forward direction (can be paused in the middle) or in the forward and backward directions at a predetermined speed with respect to the plurality of used absorbent articles 2 arranged in the inner tank 11. In the example of FIG. 2, before the operation, the position of the liquid level WL of the acidic aqueous solution WA is a position where approximately 2/3 (pieces) of the plurality of used absorbent articles 2 are immersed. However, during the operation, when the plurality of used absorbent articles 2 and the acidic aqueous solution WA are moved in the inner tank 11, each used absorbent article 2 is substantially periodically immersed in the acidic aqueous solution WA, although not simultaneously.

In this case, the inner tank 11 in the treatment tank 10 is regionalized substantially into three regions (having the same vertical width) in a vertical direction, generally, an upper region, an intermediate region, and a lower region. At that time, for example, at the initial stage of the operation, the plurality of used absorbent articles 2 are in a state of being accumulated in the substantially lower region of the inner tank 11. Thereafter, each used absorbent article 2 reaches the height in the vicinity of the intermediate region while rolling on the inner wall of the inner tank 11 due to the rotation of the inner tank 11, and then rolls down on the other plurality of used absorbent articles 2 positioned in the lower region. This process is repeated. Therefore, while the each used absorbent article reaches the vicinity of the height of the intermediate region while rolling on the inner wall of the inner tank 11, the used absorbent articles 2 collide with each other between the adjacent used absorbent articles 2, or when the used absorbent articles 2 roll down on the plurality of used absorbent articles 2 positioned in the lower region, the used absorbent articles 2 collide with each other between the adjacent used absorbent articles. Due to the action of the collision, pressure is repeatedly applied and relaxed to the used absorbent articles 2. It should be noted that, at that time, the rotational frequency of the inner tank 11 is appropriately adjusted so that the used absorbent articles 2 do not reach the upper region and then freely fall (are beaten) up to the lower region by gravity. This is because when the rotational frequency is excessively high and the used absorbent articles freely fall, the pressure on the used absorbent articles 2 becomes excessively large to separate and disassemble the used absorbent articles 2.

Here, the period of the repetition of the application and the relaxation of the pressure is not particularly limited as long as the used absorbent articles 2 can be maintained in the state when collected. For example, in a case where the inner tank 11 (having an inner diameter of 1000 mmφ) is rotated in the forward direction, the rotational frequency may be a rotation speed that is larger than 20 rpm and smaller than 35 rpm. In this case, the period of the repetition of the application and the relaxation of the pressure in the used absorbent articles 2 is not necessarily clear, and is not particularly limited (it is not necessarily constant). For example, the period thereof can be considered to be approximately 1.7 to 2.4 seconds, considering that the period is a time period required for the inner tank 11 to rotate approximately once. Further, for example, in a case where the inner tank 11 (having an inner diameter of 1000 mmφ) is rotated reciprocally in the forward and backward directions, the rotational frequency may be a rotation speed that is larger than 20 rpm and smaller than 35 rpm, and the period of the reciprocating rotation of the inner tank 11 in the forward and backward directions may be approximately 2 to 6 seconds. Even in this case, the period of the repetition of the application and the relaxation of the pressure in the used absorbent articles 2 is not necessarily clear, and is not particularly limited (it is not necessarily constant). For example, the period thereof can be considered to be approximately 2 to 6 seconds, considering that the period is a time period required for the inner tank 11 to perform a reciprocating rotational movement in the forward and backward directions. It should be noted that, in one period of the reciprocating rotational movement of the inner tank 11, the time in the forward direction and the time in the backward direction may be different from each other. For example, the time in one direction may be approximately 1.2 to 2 times the time in the other direction.

As described above, by repeatedly applying and relaxing pressure to each used absorbent article 2 while maintaining the plurality of used absorbent articles 2 in the state when collected in the acidic aqueous solution WA in the treatment tank 10, the inside of each used absorbent article 2 can be immersed in the acidic aqueous solution. Therefore, the superabsorbent polymer of each used absorbent article 2 can be dehydrated. Further, along with the dehydration of the superabsorbent polymer, the excrement attached to each used absorbent article 2 can be discharged.

Next, the removal step S3 using the pretreatment apparatus 1 in the present embodiment will be further described. In the inactivation step S2 of the preceding stage, moisture (for example, urine) included in the superabsorbent polymer of each used absorbent article 2 is discharged, and therefore the superabsorbent polymer is dehydrated. However, each used absorbent articles 2 is in a state where moisture (for example, acidic aqueous solution, moisture discharged from the superabsorbent polymer) is included as a whole. For example, the pulp fibers or nonwoven fabrics of each used absorbent article is in a state of including moisture. Therefore, in the removal step S3, moisture included in each used absorbent article 2 is removed.

In the removal step S3, specifically, the acidic aqueous solution WA is discharged from the treatment tank 10 (outer tank 12), and then the treatment tank (inner tank 11) is rotated about the rotation axis X (for example, at 100 rpm), which makes it possible to remove the moisture included in each used absorbent article 2 via the outer tank 12 by the centrifugal force. Accordingly, the moisture in the superabsorbent polymer can be dehydrated in the inactivation step S2, and the moisture in the plurality of used absorbent articles 2 can also be removed in the removal step S3, which makes it possible to obtain the plurality of used absorbent articles 2 with reduced weight.

Here, the dehydration rate of the plurality of used absorbent articles after the removal step S3 is preferably 40% or more, more preferably 60% or more, and even more preferably 65% or more. Here, the dehydration rate is calculated by the following equation.

Dehydration rate (%)

= {1 - (mass of plurality of used absorbent articles after performing pretreatment method - mass of plurality of absorbent articles before use)/(mass of plurality of used absorbent article before performing pretreatment method - mass of plurality of absorbent articles before use)} x 100

= {1 - (mass of moisture in plurality of used absorbent articles after performing pretreatment method)/(mass of moisture in plurality of used absorbent articles before performing pretreatment method)} x 100

As described above, in the present pretreatment method, the dehydration rate of the plurality of used absorbent articles 2 after the removal step S3 is 40% or more. Therefore, according to the present pretreatment method, the plurality of used absorbent articles 2 can be very satisfactorily inactivated and dehydrated in the state when collected, and the weight thereof can be very effectively reduced. Therefore, the used absorbent articles 2 can be hygienically transferred and stored for transferring to the recycling treatment step. Further, the diffusion of excrement can be suppressed by suppressing the amount of wastewater, and a recycling treatment that is more hygienic and has less burden on the environment can be embodied It should be noted that in the removal step S3, water (which may include a detergent, a disinfectant, or the like) may be further poured in the treatment tank including the plurality of used absorbent articles 2, and the treatment tank may be rotated about the rotation axis X to wash the plurality of used absorbent articles 2.

The plurality of lightweight used absorbent articles 2 obtained after the removal step S3 of the present pretreatment method are transported to a recycling treatment step.

It should be noted that, in the present embodiment, the method of performing the inactivation step S2 is not particularly limited as long as pressure can be repeatedly applied and relaxed to each of the plurality of used absorbent articles in the acidic aqueous solution. As such a method, for example, the following method can be considered.

As an example of the method, there is provided a method using a vertical rotating drum as a treatment tank. The treatment tank (rotating drum) includes an outer tank capable of holding a liquid, and an inner tank rotatably arranged on the inner side of the outer tank and having a plurality of hole portions on the circumferential wall. The plurality of used absorbent articles are moved in the inner tank by rotating the inner tank in the forward direction (can be paused in the middle) or in the forward and backward directions at a predetermined speed with respect to the plurality of used absorbent articles arranged in the inner tank. In this case, it is not necessary that all of the plurality of used absorbent articles are immersed in the acidic aqueous solution before the operation. On the other hand, during the operation, when the plurality of used absorbent articles or the acidic aqueous solution is moved in the treatment tank, each used absorbent article is substantially periodically immersed in the acidic aqueous solution, although not simultaneously.

In this case, the treatment tank of a vertical rotating drum is regionalized substantially into an upper region, an intermediate region, and a lower region in the vertical direction. At that time, for example, at the initial stage of the operation, the plurality of used absorbent articles are in a state of being accumulated in the lower region of the rotating drum. Subsequently, as the inner tank rotates, each used absorbent article is moved toward the inner wall of the inner tank, some of the used absorbent articles are further moved toward the intermediate region or the upper region, by a centrifugal force caused by the rotation, and pressure is applied by being pressed against the inner wall or the other used absorbent articles, so that the centrifugal force is eliminated and the pressure is relaxed during the pause period or the inversion period of the rotation. As described above, the action of the used absorbent article colliding with the inner wall or other used absorbent articles causes repeated application and relaxation of pressure to the used absorbent articles. It should be noted that, at that time, the rotational frequency of the rotating drum is appropriately adjusted so as to prevent the used absorbent article from being separated and disassembled by the excessively large pressure applied to the used absorbent articles.

As another example of the method, there is provided a method in which pressure is periodically applied to the plurality of used absorbent articles arranged in the treatment tank by pressing a flat member from above the plurality of used absorbent articles, and the flat member is pulled up to relax the pressure. In this case, it is not necessary that all of the plurality of used absorbent articles are used in the acidic aqueous solution before the operation. During operation, when the plurality of used absorbent articles or the acidic aqueous solution is moved in the treatment tank, each used absorbent article is substantially periodically immersed in the acidic aqueous solution, although not simultaneously. As described above, the action of the used absorbent article colliding with the inner wall, the flat member, or other used absorbent articles causes repeated application and relaxation of pressure to the used absorbent articles. It should be noted that, at that time, the pressure that presses the flat member is appropriately adjusted so as to prevent the used absorbent article from being separated and disassembled by the excessively large pressure applied to the used absorbent articles.

As another example of the method, there is provided a method in which by reciprocating the treatment tank in which the plurality of used absorbent articles are arranged in the horizontal direction, the plurality of used absorbent articles are pressed against a one-side or the other-side inner wall to apply pressure, and the pressure is relaxed between the one-side inner wall and the other-side inner wall (during the reciprocation). In this case, it is not necessary that all of the plurality of used absorbent articles are immersed in the acidic aqueous solution before the operation. During the operation, when pressure is applied, the plurality of used absorbent articles or the acidic aqueous solution is moved in the treatment tank, and each used absorbent article substantially periodically immersed in the acidic aqueous solution, although not simultaneously. As described above, the action of the used absorbent article colliding with the inner wall or other used absorbent articles causes repeated application and relaxation of pressure to the used absorbent articles. It should be noted that, at that time, the speed of the reciprocation of the treatment tank is appropriately adjusted so as to prevent the used absorbent article from being separated and disassembled by the excessively large pressure applied to the used absorbent articles.

The method of removing the moisture included in each used absorbent article 2 is not particularly limited as long as the moisture can be removed.

For example, in a case where the vertical rotating drum is used as the treatment tank, the acidic aqueous solution is discharged from the treatment tank (outer tank), and then the treatment tank (inner tank) is rotated, which makes it possible to remove the moisture included in each used absorbent article via the outer tank by the centrifugal force. In a case where a treatment tank having a flat member is used as the treatment tank, the acidic aqueous solution is discharged from the treatment tank and then the plurality of used absorbent articles are pressed with the flat member onto the inner wall of the treatment tank, which makes it possible to remove the moisture included in each used absorbent article. For example, in a case where a treatment tank that reciprocates in the horizontal direction is used, the acidic aqueous solution is discharged from the treatment tank, and then the treatment tank reciprocates in the horizontal direction, which makes it possible to remove the moisture included in each used absorbent article.

Examples

Hereinafter, the present invention will be more specifically described by exemplifying examples and comparative examples, but the present invention is not limited only to such examples.

(1) Sample

As samples of absorbent articles, a total of five types were used: two types of unused disposable diapers for infants and three types of unused disposable diapers for adults. Then, the weight of each disposable diaper was measured (the weight before use). Next, in order to simulate the state "used", each disposable diaper was made to absorb 300 g of 0.9% saline, and was rolled up. Thereafter, the weight of each disposable diaper was measured again (the weight after use before treatment).

For the plurality of disposable diapers used in the examples and comparative examples, five types of disposable diapers were prepared for each of the examples and comparative examples so that the same number of each type of disposable diaper was prepared (for example, 30 diapers × 5 types, weight before use: about 8.6 kg). In the disposable diaper for infants, the proportion of the superabsorbent polymer among the absorbent members in the absorbent body was approximately 50%, and in the disposable diaper for adults, the proportion of the superabsorbent polymer among the absorbent members in the absorbent body was approximately 30%.

(2) Pretreatment

The pretreatment method was performed for each of the examples and comparative examples using a fully automatic washing and dehydrating machine (inner diameter: 1000 mmφ). In the examples and comparative examples, the above-described pretreatment method were performed under various conditions of the acidic aqueous solution and the inactivation step. Cases where pretreatment is performed under the above-described conditions of the pretreatment method were set as examples, and cases where pretreatment is performed under conditions partially different from the above-described conditions were set as comparative examples.

(3) Results

The results are shown in Table 1 below. However, in Table 1, in the "Acidic aqueous solution", the conditions relating to the acidic aqueous solution are described, and the "Charged amount" among the conditions represents the amount of the sulfuric acid aqueous solution used. The "Sulfuric acid concentration" represents the sulfuric acid concentration in the sulfuric acid aqueous solution. The "pH" represents the pH of the sulfuric acid aqueous solution. The "Immersion rate" represents the rate of the disposable diaper (lower than the liquid level) that is immersed in the sulfuric acid aqueous solution among the plurality of disposable diapers in the introduction step.

In addition, in Table 1, in the "Inactivation step", conditions relating to the inactivation step are described, and "Rotational frequency" among the conditions represents the rotational frequency of the inner tank. The "Treatment time" represents the time during which the disposable diaper is treated in the sulfuric acid aqueous solution. The "Forward or forward-backward time" refers to the period during which the inner tank is alternately rotated in the forward direction and paused or the period during which the inner tank is alternately rotated in the forward direction and the backward direction within the treatment time.

In addition, in Table 1, the "Disposable diaper" describes the results of the pretreatment method and the like, and the "Weight before use" represents the weight of the plurality of disposable diapers before use, that is, before the disposable diapers absorb saline. The "Weight after use before treatment" represents the weight of the plurality of disposable diapers after use and before the pretreatment method is performed. The "Weight after treatment" represents the weight of the plurality of disposable diapers after the pretreatment method is performed, and "Moisture content before treatment" represents the proportion of moisture included in the plurality of disposable diapers before use and before the pretreatment method is performed (with respect to the weight before use). The "Dehydration rate" represents the proportion of the moisture included in the plurality of disposable diapers after the pretreatment method is performed (with respect to the moisture included in the plurality of disposable diapers before the pretreatment method is performed). For the "rolled state", a case where the proportion of the disposable diapers maintained in a rolled state (the state when collected) among the plurality of disposable diapers after the pretreatment method is performed is 90% or more (the proportion of the disposable diapers in a partially damaged state is less than 10%) is indicated by "O", and a case where the proportion of the disposable diapers maintained in the rolled state is less than 90% (the proportion of the disposable diapers in a partially damaged state is 10% or more) is indicated by "X". It should be noted that "X" in the "Weight after treatment" indicates that a part of the disposable diaper is ruptured, separated, and disassembled, and the weight after the treatment cannot be appropriately measured, and "X" in the "Dehydration rate" indicates that the dehydration rate cannot be calculated since the weight after the treatment cannot be measured.

[Table 1]

| | | Examples | | | Comparative Example | | | |
|---|---|---|---|---|---|---|---|---|
| | | 1 | 2 | 3 | 1 | 2 | 3 | 4 |
| Acidic aqueous solution | Charged amount (L) | 211 | 242 | 224 | 192 | 168 | 210 | 441 |
| | Sulfuric acid concentration (%) | 0.2 | 0.8 | 1.0 | 0.1 | 0.1 | 0.2 | 0.5 |
| | pH | 1.8 | 1.1 | 0.96 | 2.01 | 2.01 | 1.8 | 1.4 |
| | Immersion rate (%) | 66 | 66 | 66 | 66 | 66 | 66 | 90 |
| Inactivation step | Rotational frequency (rpm) | 30 | 30 | 30 | 20 | 20 | 30 | 35 |
| | Treatment time (min.) | 10 | 20 | 20 | 2 | 10 | 20 | 12 |
| | Forward or forward-backward time (s) | 5 | 5-3 | 5-3 | 3 | 5 | 5-3 | 5-3 |
| Disposable diapers | Weight before use (kg) | 8.6 | 17.3 | 17.3 | 8.6 | 2.5 | 8.6 | 34.5 |
| | Weight after use before treatment (kg) | 45 | 96 | 96 | 52 | 21 | 44 | 195 |
| | Weight after treatment (kg) | 30.4 | 44.6 | 41.5 | 60.4 | 18.3 | X | X |
| | Moisture content before treatment (%) | 426 | 459 | 459 | 504 | 722 | 408 | 464 |
| | Dehydration rate (%) | 41 | 65 | 69 | -19 | 14 | X | X |
| | Rolled state | O | O | O | X | X | X | X |

In Examples 1 to 3, among the plurality of disposable diapers after the pretreatment method was performed, the proportion of the disposable diapers maintained in the rolled state was 90% or more (actually, 100%). Then, a dehydration rate of higher than 40% was obtained. On the other hand, in Comparative Examples 1 to 4, among the plurality of disposable diapers after the pretreatment method was performed, the proportion of the disposable diapers maintained in the rolled state was less than 90%. Further, the dehydration rate was also low, or a large number of used absorbent articles were damaged, separated, and disassembled during the treatment, and thus a desired dehydration rate could not be obtained. Specifically, in Comparative Example 1, since the sulfuric acid concentration of the acidic aqueous solution was low (the pH was high), the superabsorbent polymer in the disposable diaper could not be inactivated. Therefore, the superabsorbent polymer reversely absorbed the acidic aqueous solution diluted with saline discharged from the disposable diaper. In Comparative Example 2, the dilution of the acidic aqueous solution could be suppressed by reducing the amount of the disposable diaper, but the disposable diaper in the rolled state was almost not dehydrated and had a low dehydration rate. In Comparative Example 3, when the sulfuric acid water concentration was increased (the pH was lowered) to the same level as in Example 1, and the treatment time was changed to 20 minutes, which is twice the treatment time of Example 1, the disposable diaper was partially damaged, and the pulp fibers and the superabsorbent polymer came out into the treatment tank. In Comparative Example 4, when the amount of the disposable diaper was increased and the sulfuric acid concentration was further increased (the pH was further increased) to increase the amount of the sulfuric acid aqueous solution, the amount of solid matter in the treatment tank was increased, and the load applied to the disposable diapers on the lower part during the inactivation step became excessively large. Thus, the disposable diapers were partially damaged, and the pulp fibers and the superabsorbent polymer came out into the treatment tank. It should be noted that, although not shown in the examples and comparative examples, in a case where the liquid level of the acidic aqueous solution was higher than the uppermost part of the disposable diapers, that is, in a case where the amount of the acidic aqueous solution was excessively large, a large amount of the disposable diapers floated on the liquid level, and the pretreatment method was less likely to be performed.

The pretreatment method of the present invention is not limited to the above-described embodiment, and can be appropriately modified or combined with well-known techniques within a range not departing from the aspect and gist of the present invention.

REFERENCE SIGNS LIST

    S1: introduction step
    S2: Inactivation step
    S3: removal step

**Claims**

**1.**   A pretreatment method of removing dirt attached to a used absorbent article including a superabsorbent polymer and moisture absorbed in the used absorbent article, the method comprising:

        an introduction step of introducing a plurality of used absorbent articles and a strongly acidic aqueous solution into a treatment tank, each of the plurality of used absorbent articles being in a state when collected, a liquid level of the acidic aqueous solution being at a position lower than an uppermost part of the plurality of used absorbent articles that are not floating;
        an inactivation step of immersing each of the plurality of used absorbent articles in the acidic aqueous solution by repeatedly applying and relaxing pressure to each of the plurality of used absorbent articles in the acidic aqueous solution, while maintaining the plurality of used absorbent articles in the state when collected in the treatment tank; and
        a removal step of removing moisture from the plurality of used absorbent articles.

**2.**   The pretreatment method according to Claim 1, wherein
    the inactivation step includes a step of applying and relaxing the pressure by causing each of the plurality of used absorbent articles to collide with each other.

**3.**   The pretreatment method according to Claim 2, wherein

        the treatment tank is a horizontal rotating drum, and
        the inactivation step includes a step of causing each of the plurality of used absorbent articles to collide with each other by rotation of the rotating drum.

**4.**   The pretreatment method according to any one of Claims 1 to 3, wherein
    in the introduction step, the liquid level of the acidic aqueous solution is at a position where 3/5 to 4/5 of the plurality of used absorbent articles are immersed.

**5.**   The pretreatment method according to any one of Claims 1 to 4, wherein
    in the introduction step, a weight of the acidic aqueous solution is a weight of 2 to 3 times a weight of the plurality of used absorbent articles in the treatment tank.

**6.**   The pretreatment method according to any one of Claims 1 to 5, wherein
    in the introduction step, a pH of the acidic aqueous solution is 2.0 or lower.

**7.**   The pretreatment method according to any one of Claims 1 to 6, wherein
    in the introduction step, the acidic aqueous solution contains sulfuric acid.

**8.**   The pretreatment method according to any one of Claims 1 to 7, wherein
    a dehydration rate of the plurality of used absorbent articles after the removal step is 40% or more.

Fig. 1

Fig. 2

| INTERNATIONAL SEARCH REPORT | International application No. |
|---|---|
| | **PCT/JP2022/014144** |

**A. CLASSIFICATION OF SUBJECT MATTER**

*B09B 5/00*(2006.01)i; *B29B 17/02*(2006.01)i; *B09B 3/20*(2022.01)i
FI:    B09B3/20; B29B17/02; B09B5/00 Z ZAB

According to International Patent Classification (IPC) or to both national classification and IPC

**B. FIELDS SEARCHED**

Minimum documentation searched (classification system followed by classification symbols)

B09B5/00; B29B17/02; B09B3/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-131157 A (PANASONIC CORPORATION) 31 August 2020 (2020-08-31) claim 1, paragraphs [0018], [0029], [0035], [0037], [0047] | 1-8 |
| Y | JP 2020-195994 A (UNICHARM CORPORATION) 10 December 2020 (2020-12-10) claim 5, paragraphs [0033]-[0035] | 1-8 |
| Y | JP 2018-21283 A (UNICHARM CORPORATION) 08 February 2018 (2018-02-08) claim 1 | 1-8 |
| Y | WO 2018/025501 A1 (UNICHARM CORPORATION) 08 February 2018 (2018-02-08) claim 1 | 1-8 |
| Y | JP 2010-84031 A (SAMUZU KK) 15 April 2010 (2010-04-15) claim 1, paragraphs [0007]-[0008] | 1-8 |
| Y | JP 2020-185518 A (PANASONIC CORPORATION) 19 November 2020 (2020-11-19) paragraphs [0009]-[0010] | 1-8 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/014144**

| Patent document cited in search report | | | Publication date (day/month/year) | Patent family member(s) | | | Publication date (day/month/year) |
|---|---|---|---|---|---|---|---|
| JP | 2020-131157 | A | 31 August 2020 | US claim 1, paragraphs [0019], [0046], [0052], [0054], [0064] | 2020/0269292 | A1 | |
| | | | | EP | 3698893 | A1 | |
| | | | | CN | 111604350 | A | |
| JP | 2020-195994 | A | 10 December 2020 | WO | 2020/241025 | A1 | |
| JP | 2018-21283 | A | 08 February 2018 | US claim 1 | 2019/0169795 | A1 | |
| | | | | WO | 2018/025501 | A1 | |
| | | | | EP | 3495553 | A1 | |
| | | | | CN | 109563682 | A | |
| WO | 2018/025501 | A1 | 08 February 2018 | US claim 1 | 2019/0169795 | A1 | |
| | | | | EP | 3495553 | A1 | |
| | | | | CN | 109563682 | A | |
| JP | 2010-84031 | A | 15 April 2010 | (Family: none) | | | |
| JP | 2020-185518 | A | 19 November 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009183893 A
- JP 2020183585 A